# EUROPEAN PATENT SPECIFICATION

(11) **EP 1 360 996 B1**
(45) Date of publication and mention of the grant of the patent: **04.01.2006**
(21) Application number: 03010194.3
(22) Date of filing: 06.05.2003
(51) Int. Cl.: B05B 12/14, B05B 5/16

(54) **Method and apparatus for delivering and applying an electrically conductive paint**
Verfahren und Vorrichtung zur Versorgung und Auftragung von elektrisch leitfähigem Lack
Méthode et appareil d'alimentation et de revêtement de peinture électriquement conductive

(30) Priority: 29.01.2003 US 443427 P; 15.08.2002 US 403715 P; 07.05.2002 US 378506 P; 27.05.2002 DE 10223498
(43) Date of publication of application: 12.11.2003
(73) Proprietor: Dürr Systems GmbH, 70435 Stuttgart (DE)
(72) Inventor: Herre, Frank, 71739 Oberriexingen (DE); Melcher, Rainer, 71720 Oberstenfeld (DE); Baumann, Michael, 74223 Flein (DE); Michelfelder, Manfred, 71711 Steinheim (DE); Hering, Joachim, 88525 Dürmentingen (DE); Martin, Herbert, 71384 Weinstadt (DE)
(74) Representative: Heusler, Wolfgang

(56) References cited:
- EP-A- 1 108 475
- DE-A- 19 937 426
- US-A- 5 993 913

## Description

### FIELD OF THE INVENTION

This invention relates to a method and apparatus for delivering and applying an electrically conductive paint by an electrically charged paint applicator which electrically charges the paint at a high voltage received from a color changer at ground potential and which electrically isolates the color changer from the applicator.

### BACKGROUND OF THE INVENTION

The automotive industry, for example, now proposes to replace solvent based paint with water based paint to reduce environmental concerns and pollution abatement apparatus. However, water based paint is highly conductive and in a typical mass production application, the paint is applied with an electrostatic rotary atomizer which electrically charges the paint to improve transfer efficiency. Further, such applications require rapid switching from one color paint to another using a color changer. A color changer is simply a valve system having a number of ports each connected to a source of a different color paint and generally also includes a port connected to a source of solvent, which is typically deionized water for water based paints. The color changer must be at ground potential and the color changer therefore must be electrically isolated from the applicator at high electrical potential.

The prior art has proposed various methods and apparatus for delivering and applying conductive liquid coating materials, such as water based paint, from a source at ground potential, such as a color changer, with an electrically charged paint applicator, such as an electrostatic rotary atomizer, which electrically isolates the source of liquid coating at ground potential from the electrically charged paint applicator, sometimes referred to as a "voltage block." However, such voltage block devices are often complex, expensive, subject to failure and limited in application. The prior art has also proposed electrically isolating a predetermined quantity or volume of electrically conductive paint between a front and rear pig in the delivery line between the color changer and the applicator which are moved through the delivery line by pneumatic pressure. This method is also, however, limited in application and requires a delivery line of sufficient length such that the delivery line is longer than the distance between the front and rear pigs. There is therefore a need for a simple, reliable method and apparatus for conveying and applying a conductive paint from a color changer at ground potential to an electrically charged paint applicator, such as an electrostatic rotary atomizer, which avoids the problems associated with the prior art as set forth hereinbelow.

EP-A-1 108 475 discloses a method of applying an electrically conductive paint to a substrate, comprising the steps of delivering the paint through a line from a color changer at ground potential to a cannister; electrically isolating the color changer from the cannister; delivering the paint through a second line from the cannister to an electrically charged applicator; electrically charging the conductive paint; and applying the paint to a substrate in a spray booth. The cannister includes a piston driven by compressed air for delivering the paint to the applicator, whereas separate dosing pumps are provided for dosing the paint when delivered to the cannister and to the applicator, respectively. The electrical isolation between the color changer and the canister is achieved by a line section in which a pig is reciprocated.

DE 199 37 426 A discloses a coating system comprising a paint supply switching device, two paint cannisters, a paint applicator, a first pair of supply lines, a pigging element moveable in each of said first pair of supply lines between a first station adjacent said paint supply switching device and a second station adjacent one of said paint cannisters, and a second pair of separate supply lines connecting the cannisters to the paint applicator. A source of cleaning fluid communicates with the second delivery lines. No pigging elements are provided in the second pair of supply lines. The cannisters have pistons that are retracted against the force of a pressure spring and are extended by the spring for driving the paint to the applicator.

### SUMMARY OF THE INVENTION

As set forth above, the method and apparatus of this invention is adapted to apply an electrically conductive paint, such as a water based paint, to a substrate with an electrically charged paint applicator, such as an electrostatic rotary atomizer or other atomizer, from a source of paint at ground potential, particularly, but not exclusively a color changer. As used herein, the term "paint" includes water based paints and generally any liquid coating, particularly including coatings for protective or decorative purposes. The method and apparatus of this invention is, however, particularly directed to the application of an electrically conductive paint which is applied to a substrate with an electrically charged paint applicator, such as an electrostatic rotary atomizer, and wherein the source of the electrically conductive paint is at ground potential. As used herein, the term "color changer," includes any valving system adapted to deliver different paints, as this term is defined above.

The method of applying an electrically conductive paint to a substrate of this invention is particularly adapted for mass production applications, wherein the substrate is located in a confined paint spray booth and the electrically charged paint applicator is located in the paint spray booth. In a typical application, the paint applicator may be a robotic paint applicator typically mounted on rails which move with the substrate, such as an automotive body. However, the paint applicator may be an electrically charged paint spray gun or overhead or side mounted electrostatic rotary atomizers of the type presently used in mass production applications including, but not limited to the automotive industry. As set forth above, the apparatus further includes a color changer, as defined above, at ground potential and the electrically conductive paint is delivered through a delivery line, such as a plastic tube, preferably having a friction resistant inner layer and an intermediate dielectric layer, such as polyethylene, to prevent arcing.

The method of this invention then includes delivering the electrically conductive paint from the color changer at ground potential, then electrically isolating the color changer from both the delivery line and the electrically conductive paint. Finally, the method of this invention includes delivering the electrically conductive paint through the delivery line to the electrically charged paint applicator, thereby charging the conductive paint and applying the paint to a substrate while the color changer is electrically isolated from the paint in the delivery line. In a preferred embodiment, the conductive paint in the delivery line is a continuous stream which is electrically charged by the paint applicator.

One preferred embodiment of the method of this invention includes delivering the electrically conductive paint from the color changer to a paint cannister through a second delivery line between the color changer and the paint cannister, then electrically isolating the color changer from the paint cannister and finally delivering the electrically conductive paint from the paint cannister to the electrically charged paint applicator through the first delivery line described above. In one preferred embodiment, the second delivery line between the color changer and the paint cannister includes a pig or pigging element driving paint in the second delivery line from the color changer to the paint cannister, wherein the pigging element is driven by a nonconductive fluid, such as air, thereby electrically isolating the color changer from the paint cannister. In a preferred embodiment of the method of this invention, the paint cannister further includes a piston, wherein the method of this invention includes retracting the piston in the paint cannister to receive the conductive paint from the color changer, then extending the piston to drive the conductive paint through the first delivery line to the electrically charged paint applicator while the paint cannister is electrically isolated from the color changer.

In a preferred embodiment of the apparatus of this invention, the piston of the paint cannister is driven by a servomotor providing very accurate dosing of paint. The first delivery line between the paint cannister and the applicator may also include a pigging element which is driven by the conductive paint from the paint cannister to a pig station adjacent the applicator. The pigging element is then driven by pneumatic pressure from the applicator to adjacent the paint cannister, thereby returning paint in the first delivery line to the paint cannister and electrically isolating the applicator from the paint cannister. The paint returned to the paint cannister can then be returned to the color changer by again extending the piston of the paint cannister.

A preferred embodiment of the apparatus for delivering and applying an electrically conductive paint of this invention thus includes a paint spray booth, an electrically charged paint applicator located within the paint spray booth and a color changer at ground potential preferably located outside the paint spray booth, which may be conventional as known by those skilled in this art. The apparatus of this invention further includes at least one paint cannister connected to the color changer by the second delivery line described above having a pig or pigging element movable between the color changer and the paint cannister to deliver paint in the second delivery line to the paint cannister and electrically isolate the color changer from the paint cannister following delivery of paint to the paint cannister as described above. The apparatus of this invention also includes a first delivery line from the paint cannister to the electrically charged paint applicator. In a preferred embodiment, the apparatus further includes a pig or pigging element in the first delivery line which is pushed by the conductive paint from the paint cannister to the paint applicator. Paint remaining in the first delivery line may then be driven to the paint cannister by the pigging element in the first delivery line by a nonconductive fluid, such as pressurized air or pneumatic pressure, wherein the piston in the paint cannister is retracted to receive the paint and the piston in then extended to return the paint to the color changer. As set forth above, the piston of the paint cannister is preferably driven by a servomotor or the like providing a very accurate metered volume or dose of paint to the paint applicator, which can be varied for each application of paint depending upon the application. In one preferred embodiment of the apparatus of this invention, the color changer and at least one paint cannister are located outside the paint booth in an isolation cabinet preferably formed of an electrically insulated or dielectric material.

The piston type paint cannister driven by dosing or metering drive means as mentioned above eliminates the requirement of a metering pump (usually a gear pump) adjacent the atomizer. This makes it possible to place the second pig station within the atomizer, thereby reducing paint and solvent losses to a minimum. Reference is made in this regard to EP 1314480.

Other advantages and meritorious features of the method and apparatus for delivering and applying an electrically conductive paint of this invention will be more fully understood from the following description of the preferred embodiments, the appended claims and the drawings, a brief description of which follows.

### BRIEF DESCRIPTION OF THE DRAWINGS

Figure 1 is a side elevation of a paint spray booth illustrating one embodiment of an exterior isolation cabinet;
Figure 2 is an enlarged view of the isolation cabinet shown in Figure 1;
Figure 3 is a schematic view of one embodiment of a paint dosing cylinder or cannister illustrated in Figures 1 and 2; and
Figures 4A to 4H are schematic illustrations of the method of delivering and applying an electrically conductive paint of this invention.

### DESCRIPTION OF THE PREFERRED EMBODIMENTS

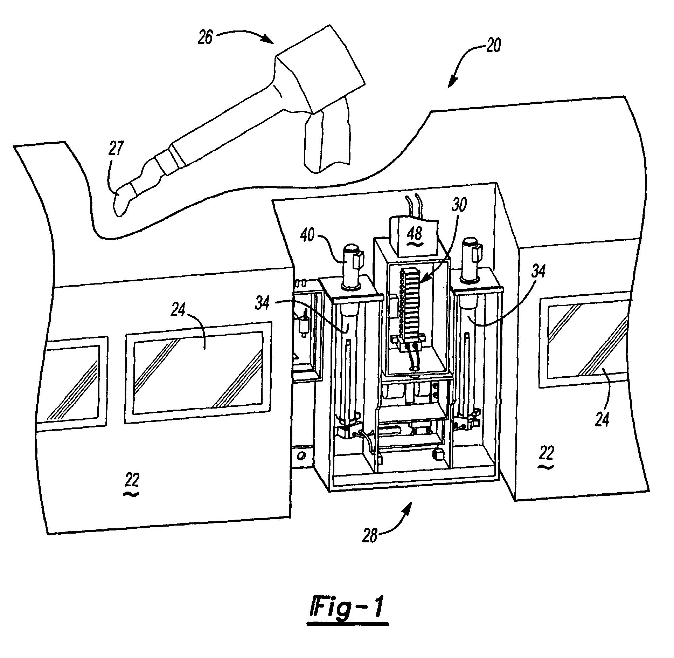

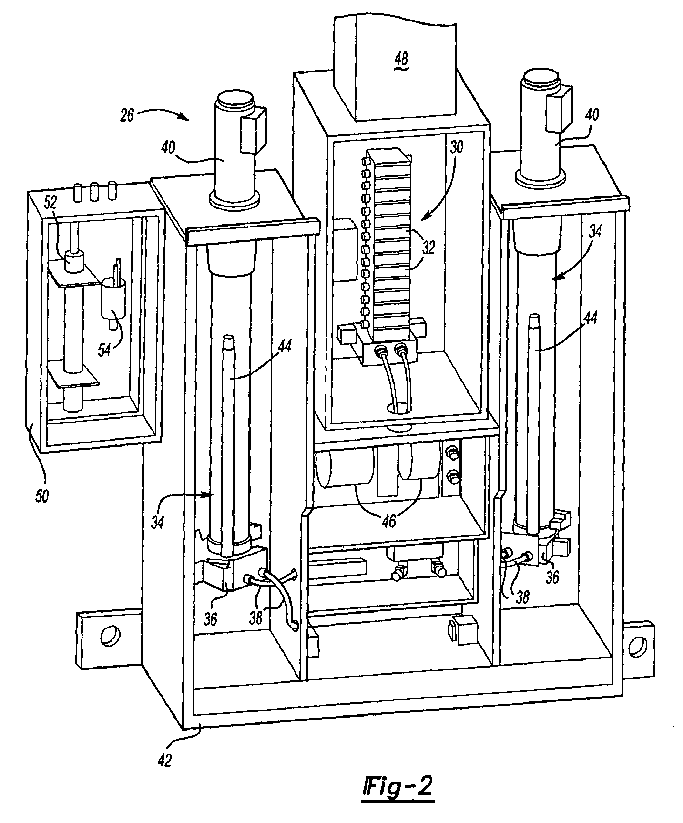

As set forth above, the method and apparatus for delivering and applying an electrically conductive paint (as defined above) of this invention may be utilized in mass production applications, such as illustrated in Figure 1, wherein electrically conductive paint is applied to a substrate in an enclosed clean environment which includes one or several paint applicators as described below. The paint spray booth 20 is defined by an enclosure wall 22, which may include windows 24 for viewing the paint spray booth and at least one paint applicator, such as the robot paint applicator 26 illustrated. As will be understood, a conventional paint applicator is generally mounted on a rail (not shown) which moves with the substrate, such as an automotive body, to apply electrically conductive paint through an applicator at high voltage, such as the electrostatic rotary atomizer 27 illustrated in Figure 1. In a preferred embodiment of the method and apparatus of this invention, the electrically conductive paint is electrostatically charged to a high voltage as it is received through the paint applicator 27 as described further hereinbelow. In one preferred embodiment of the apparatus of this invention, the paint cannisters 34 and color changer 30 are located outside the paint spray booth 20 in an electrically insulated isolation cabinet or voltage block module 28 as shown in Figure 1 and Figure 2 is an enlarged view of the voltage block module 28 as now described.

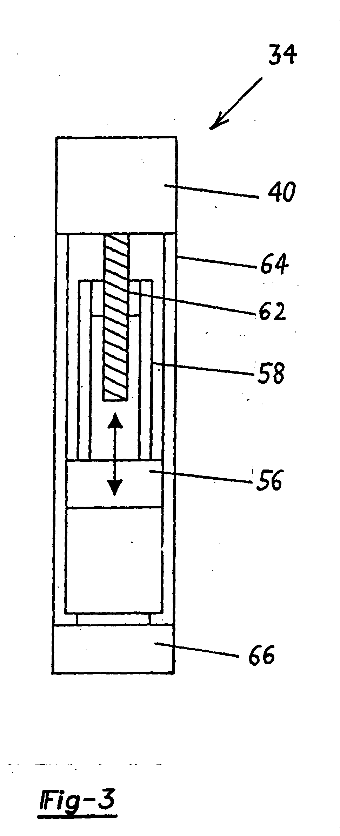

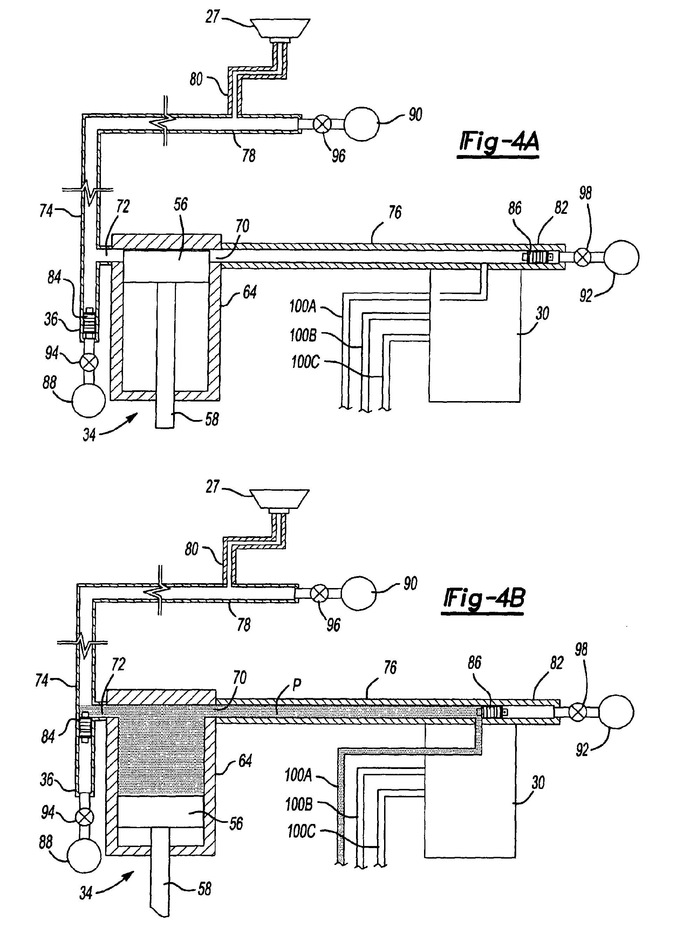

The voltage block module or electrical insulation cabinet 28 shown in Figure 2 includes a color changer 30 which, as described above, includes a plurality of valve modules 32 each connected to a source of different colored electrically conductive paint (not shown). This embodiment of the voltage block module 28 further includes two paint dosing devices or paint cannisters 34 each including a pig station 36 connected by supply or delivery lines 38 to color changer 30 and the applicator 26 shown in Figure 1 and described further below in regard to Figures 4A to 4H. In one preferred embodiment, the paint cannisters 34 each include a piston 56 as described below with respect to Figure 3 having a servomotor drive 40, such that the cannisters 34 each provide an accurate volume or "dose" of paint to the applicator 27 shown in Figure 1. In a preferred embodiment, the voltage block module is defined by an electrically insulated cabinet frame 42, preferably formed of a nonconductive or electrically insulating polymer, such as Delrin®, an acetal polymer available from DuPont, or other suitable nonconductive polymers. As described further in a co-pending application assigned to the assignee of this application, the voltage block module 28 includes resistors 44, such as 9 G ohm resistors, solvent cannisters 46 and a hood or enclosure 48 which receives the lines from the paint cannisters 34 to the applicator (not shown). The disclosed embodiment of the electrical isolation cabinet or voltage block module 28 further includes a grounding switch cabinet 50 which includes various electrical components, including a high voltage cascade or voltage generator 52 and a grounding switch 54. However, in view of the fact that the specific components of the electrical isolation cabinet or voltage block module 28 does not form a part of this invention, except for the color changer and paint dosing cylinders 34, no further explanation is necessary for complete understanding of the invention as claimed.

Figure 3 illustrates schematically one preferred embodiment of the paint cannister or paint dosing cylinder 34 shown in Figure 2. The disclosed embodiment of the paint dosing cylinder 34 may correspond to the device disclosed in DE 102 33 633 and includes a piston 56 connected to a piston guide rod 58, which is connected to a bearing and a gear drive 62 connected to a servomotor 40. The piston 56 reciprocates in a piston cylinder or housing 64 which is preferably formed of a ceramic material avoiding undesired volume variations and providing electrical isolation for receipt of charged conductive paint as described below. The piston 56 may further include a guide rod (not shown). As described above, a preferred embodiment of the paint piston dosing device 34 includes a pig station 36 mounted on the cylinder 34 and having ports for receipt of the delivery lines 38 shown in Figure 2. The components of the apparatus illustrated in Figures 1 to 3 will be more fully understood from the following description of the method of delivering and applying an electrically conductive paint shown in Figures 4A to 4H described below.

Figures 4A to 4H illustrate schematically the apparatus described above, including the paint applicator 27 at high voltage, a color changer 30 at ground potential, at least one paint cannister or paint dosing cylinder 34 including a piston 56, reciprocable in a piston cylinder or housing 64 having a piston rod 58 preferably connected to a servomotor drive 40 shown in Figure 3 and a pig station 36 at one end of the piston dosing device 34. The housing 64 of the piston dosing device 34 includes an inlet 70 and an outlet 72 in fluid communication with the first delivery line 74 between the piston dosing device 34 and the applicator 27 and the inlet 70 is connected by a second delivery line 76 to the color changer 30. The disclosed apparatus further includes a second pig station 78 adjacent or within the applicator 27 which is connected to the first delivery line 74 by a line 80. The color changer also includes a third pig station 82 adjacent or located within the color changer 30. As shown in Figure 4A, the first and second pig stations 36 and 78, respectively, are preferably in the form of trunk lines of the first delivery line 74, such that paint or other fluid can flow from the outlet 72 of the paint cannister or piston dosing device 34 to the applicator 27 through line 80 without flowing around the pig or pigging element 84. Similarly, the third pig station 82 is preferably a trunk line of the second delivery line 76, such that paint or other fluid can flow from the color changer 30 through the second delivery line 76 without flowing past the pig or pigging element 86 in the third pig station 82. However, as described further below, the inlet 70 of the paint cannister or piston dosing device 34 may be configured to receive paint around the second pigging element 86. Further, each of the pig stations 36, 78 and 82 include a source of nonconductive fluid under pressure 88, 90 and 92, respectively, which are controlled by valves 94, 96 and 98, respectively. Having described one preferred embodiment of the apparatus of this invention, the method of delivering and applying an electrically conductive paint of this invention may now be described with reference to Figures 4A to 4G as described below.

As set forth above, the color changer 30 comprises a series of valves each having a port connected to a separate source of liquid paint under pressure (not shown) by lines 100A, 100B and 100C. In a typical application, the lines 100A, 100B and 100C are connected to separate sources of liquid paint having different colors for application to a substrate by applicator 27, such as automotive bodies received through the paint spray booth 20 illustrated in Figure 1. As set forth above, the color changer 30 must be at ground potential because the color changer is connected by lines 100A, 100B and 100C to sources of liquid paint. Further, the applicator 27 is at a high voltage or high electrical potential and applies a high electrical charge to the paint as it is received through the applicator 27 and the substrate (not shown) is generally at ground potential to improve transfer efficiency. Thus, paint is received through one of the lines 100A, 100B or 100C.

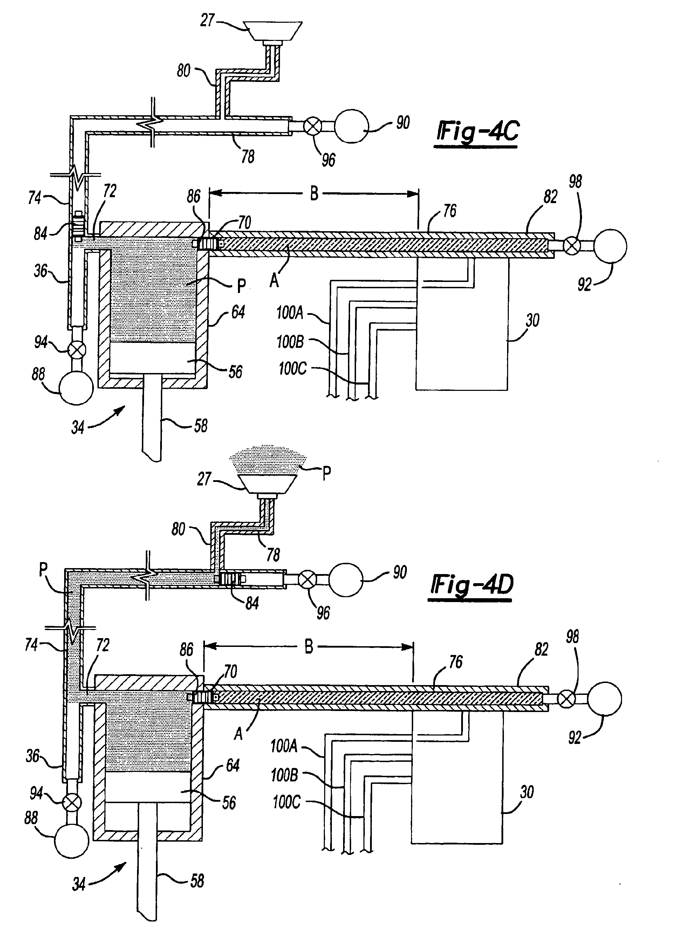

In Figure 4B, paint "P" is received through line 100A to the color changer 30 and the paint is then delivered under pressure through the second delivery line 76 to the paint cannister 34. As set forth above, the piston guide rod 58 may be connected to a servomotor drive 40 illustrated in Figures 2 and 3, which withdraws the piston 56 to receive a predetermined volume or "dose" of paint in cylinder 64 of the paint piston dosing device 34 as shown in Figure 4B. As shown, the first pigging element 84 is then located in the first pig station 36 and the second pig or pigging element 86 is then located in the third pig station 82 and the pigging elements do not block the flow of paint. The valve 98 in the third pig station 82 is then opened, driving nonconductive fluid, such as air "A," from the source 92 against the second pigging element 86, which drives the second pigging element through the second delivery line 76 to the paint dosing device 34, driving conductive paint P remaining in the second delivery line 76 to the paint cannister or paint dosing device 34 as shown in Figure 4C, thereby electrically isolating or creating a voltage block "B" between the color changer 30 and the paint cannister 34 as illustrated by the arrows in Figures 4C to 4E. As the second pigging element 86 is moved to the paint cannister 34, the piston 56 is simultaneously withdrawn to fully charge the paint cannister or dosing device 34 as shown in Figure 4C. As will be understood, however, the piston 56 may be controlled to deliver any predetermined volume or dose of paint for delivery to the applicator 27, as now described.

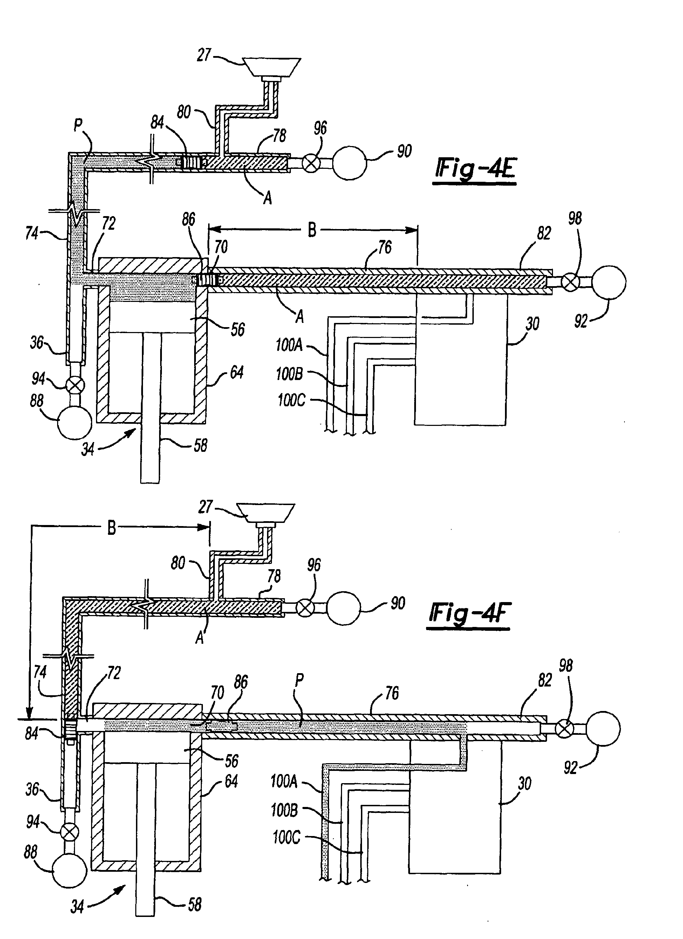

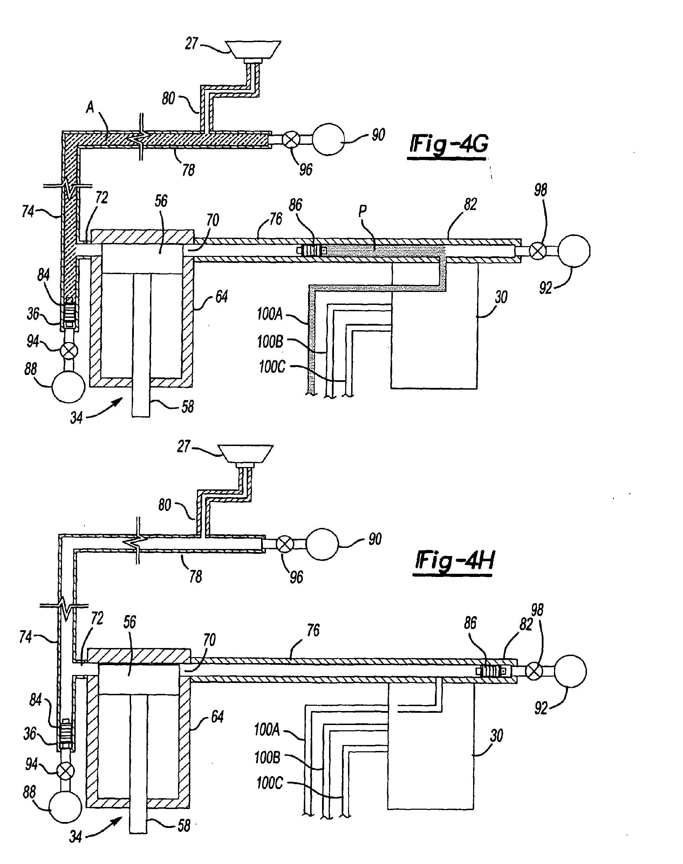

While the paint cannister or dosing device 34 is electrically isolated from the color changer 30, as shown by "B", the piston 56 is then reversed, driving paint P through the first delivery line 74 and line 80 to the applicator 27, thereby electrically charging the paint and applying the paint through the applicator 27 to a substrate (not shown) in the paint spray booth 20 shown in Figure 1. In this embodiment, the valve 94 to the source of nonconductive fluid 88 is opened to drive the first pigging element 84 ahead of the paint P as the paint is driven from the paint cannister 34 to the applicator 27, thus receiving the first pigging element 84 in the second pig station 78 as shown in Figure 4D. Alternatively, the pigging element 84 may remain in the first pig station 36 and pneumatic pressure may then be utilized from source 88 to drive paint remaining in the first delivery line 74 to the paint applicator 27. In the embodiment disclosed, upon completion of the first paint cycle, the valve 96 is open to the source of nonconductive fluid 90, driving the first pigging element 84 from the second pig station 78 adjacent or within the applicator 27 to the first pig station 36 adjacent the paint dosing device 34, thereby returning paint P remaining in the first delivery line 74 to the paint dosing device 34 as shown in Figure 4E. The paint applicator 27 is thus electrically isolated from the paint cannister forming a voltage block "B" as shown in Figure 4F. The piston 56 in the paint dosing device 34 is simultaneously retracted to receive the paint P delivered from the first delivery line 74 by the first pigging element 84. The piston 56 of the paint dosing device 34 is then extended again, driving paint from the paint cannister or piston dosing device 34 to the color changer 30 and through line 100A to the original source of conductive paint as shown in Figure 4F. Finally, the second pigging element 86 is driven through the second delivery line 76 from adjacent the paint cannister or piston dosing device 34 to the color changer, returning the paint in the second delivery line 76 to the color changer 30 and from the color changer to the source of liquid paint through line 100A by driving the second pigging element 86 through the second delivery line 76 as shown in Figures 4G and 4H.

As will be understood from the above description, the method of this invention includes delivering electrically conductive paint P from the color changer 30 and then electrically isolating the color changer 30 from the electrically conductive paint P, then delivering the electrically conductive paint through the first delivery line 74 to the electrically charged paint applicator 27, thereby electrically charging the electrically conductive paint. In one preferred embodiment, the conductive paint is a continuous stream to the applicator 27 in the delivery line 74 as shown, for example, in Figures 4D and 4E. In a preferred embodiment of the method of this invention, the electrically conductive paint is first delivered to a paint cannister, such as the piston dosing device 34 as shown in Figure 4C and the color changer 30 is then electrically isolated from the piston dosing device 34 as shown in Figure 4C. In the disclosed embodiment, the color changer 30 is electrically isolated from the piston dosing device 34 by driving the second pigging element 86 through the second delivery line 76, forming a voltage block B as shown in Figure 4C. As will be understood by those skilled in this art, however, the color changer 30 may be electrically isolated from the piston dosing device 34 by pneumatic pressure, although a pigging element 86 is shown is preferred. The paint P is then driven by the piston 56 to the electrically charged applicator 27 through line 74 as shown in Figure 4D while the color changer 30 is electrically isolated from the electrically conductive paint and the piston dosing device 34.

As will be understood by those skilled in this art, various modifications may be made to the method and apparatus for delivering and applying an electrically conductive paint of this invention within the purview of the appended claims. Although a piston dosing device of the general type is preferred, the first delivery line 74 may be of any length, including a coil, providing sufficient length to provide a voltage block as by utilizing a second pigging element 86 as described above. Further, the first pigging element 84 may be utilized to deliver paint remaining in the first delivery line 74 to the paint applicator 27, rather than returning the paint to the color changer 30 as described above. Having described preferred embodiments of the method and apparatus for delivering and applying electrically conductive paint of this invention, the invention is now claimed as follows.

## Claims

1. A method of applying an electrically conductive paint to a substrate located in a paint spray booth with an electrically charged paint applicator (27) located within said paint spray booth from a color changer (30) at ground potential, said method comprising the following steps:
delivering electrically conductive paint through a delivery line (76) from said color changer (30) at ground potential to a paint cannister (64) located outside said paint spray booth;
then electrically isolating said color changer (30) from said paint cannister (64) and said electrically conductive paint; and
then delivering said electrically conductive paint through a further delivery line (74) from said paint cannister (64) located outside said paint spray booth to said electrically charged paint applicator (27) located within said paint spray booth, electrically charging said electrically conductive paint and applying said electrically conductive paint to said substrate with said color changer (30) electrically isolated from said paint cannister (64) and said electrically conductive paint;
and moving a pig (84) through said further delivery line (74) for electrically isolating the paint applicator (27) from said canister (64),
wherein said paint cannister includes a piston (56), said method including retracting said piston in said paint cannister (34) to receive said electrically conductive paint from said color changer (30), then extending said piston to drive said electrically conductive paint through said delivery line (74) to said electrically charged paint applicator.

2. The method as defined in Claim 1, wherein said color changer(30) is connected to said paint cannister (34) by a delivery line (76) having a pig (86) movable in said delivery line (76), said method including moving said pig from adjacent said color changer to adjacent said paint cannister, thereby delivering said electrically conductive paint to said paint cannister and electrically isolating said color changer from said paint cannister.

3. The method as defined in Claim 2, wherein said method includes driving said pig (86) from adjacent said color changer (30) to adjacent said paint cannister (34) with a non-conductive fluid.

4. The method as defined in Claim 2 or 3, wherein said method includes delivering a predetermined volume of said electrically conductive paint from said color changer (30) to said paint cannister (34) through said delivery line (76), then driving said pig (86) through said delivery line (76) with a nonconductive fluid from adjacent said color changer to adjacent said paint cannister to deliver said electrically conductive paint in said delivery line to (76) said paint cannister and electrically isolate said color changer from said paint cannister.

5. The method as defined in any preceding claim including delivering said electrically conductive paint under pressure to said electrically charged paint applicator (27) within said paint booth through said further delivery line (74) in a continuous stream, electrically charging said electrically conductive paint in said further delivery line (74) only when said color changer (30) is electrically isolated from said further delivery line (74) and said electrically charged paint.

6. The method as defined in Claim 5, wherein said method includes delivering a predetermined volume of said electrically conductive paint from said color changer (30) to said paint cannister (34) through said delivery line (76), then driving said pig (86) through said delivery line from adjacent said color changer to adjacent said paint cannister with said nonconductive fluid to deliver said electrically conductive paint remaining in said second delivery line to said paint cannister and electrically isolating said color changer from said paint cannister.

7. An apparatus for applying an electrically conductive paint to a substrate, comprising:
a paint spray booth (20);
an electrically charged paint applicator (27) within said paint spray booth (20);
a color changer (30) located outside said paint spray booth at ground potential;
at least one paint cannister (34);
a first delivery line (74) from said paint cannister (34) to said electrically charged paint applicator (27) adapted to deliver electrically conductive paint to said electrically charged paint applicator; and
a second delivery line (76) between said paint cannister (34) and said color changer (30) having a pig (86) movable therein between said color changer and said paint cannister to deliver paint in said second delivery line to said paint cannister and electrically isolate said color changer from said paint cannister and said electrically conductive paint when paint is delivered from said paint cannister to said electrically charged paint applicator, charging said electrically conductive paint,
said paint cannister including an inlet communicating with said second delivery line (76), an outlet communicating with said first delivery line (74), and a piston (56) movable within said paint cannister (34) adapted to move away from said inlet upon receipt of said electrically conductive paint from said color changer (30) and move toward said outlet to drive electrically conductive paint under pressure through said first delivery line (74) to said electrically charged paint applicator (27); and
said paint cannister (34) being located outside said paint spray booth (20) in an electrically insulated cabinet (28).

8. The apparatus for applying an electrically conductive paint as defmed in Claim 7, wherein said piston (56) is driven by a servomotor (40) or other dosing drive means.

9. The apparatus as defined in claim 7 or 8, wherein said apparatus includes a second paint cannister (34) connected to said color changer (30) by a third delivery line having a pig movable between said color changer and said second paint cannister to deliver electrically conductive paint from said color changer to said second paint cannister and electrically isolate said color changer from said second paint cannister following delivery of electrically conductive paint to said second paint cannister and a fourth delivery line from said second paint cannister to said electrically charged paint applicator (27).

## Patentansprüche

1. Verfahren zum Applizieren eines elektrisch leitfähigen Lacks von einem auf Erdpotenzial liegenden Farbwechsler (30) auf ein Substrat, das sich in einer Lackierkabine befindet, mit einer in der Kabine befindlichen elektrisch geladenen Lackapplikationsvorrichtung (27), mit folgenden Schritten:
Zuführen von elektrisch leitfähigem Lack durch eine Zufuhrleitung (76) von dem Farbwechsler (30) auf Erdpotential zu einem Lackkanister (64), der sich außerhalb der Lackierkabine befindet;
dann elektrisches Isolieren des Farbwechslers (30) vom Lackkanister (64) und von dem elektrisch leitfähigen Lack; und
dann Zuführen des elektrisch leitfähigen Lacks durch eine weitere Zufuhrleitung (74) vom Lackkanister (64), der sich außerhalb der Lackierkabine befindet, zur elektrisch geladenen Lackapplikationsvorrichtung (27), die sich innerhalb der Lackierkabine befindet, elektrisches Aufladen des leitfähigen Lacks und Applizieren des elektrisch leitfähigen Lacks auf das Substrat, wobei der Farbwechsler (30) elektrisch vom Lackkanister (64) und von dem elektrisch leitfähigen Lack isoliert ist;
und Bewegen eines Molchs (84) durch die weitere Zufuhrleitung (74), um die Lackapplikationsvorrichtung (27) elektrisch vom Kanister (64) zu isolieren,
wobei der Lackkanister einen Kolben (56) enthält und das Verfahren das Zurückziehen des Kolbens im Lackkanister (34) zur Aufnahme des elektrisch leitfähigen Lacks von dem Farbwechsler (30) und dann ein Ausfahren des Kolbens einschließt, um den elektrisch leitfähigen Lack durch die Zufuhrleitung (74) zur elektrisch geladenen Lackapplikationsvorrichtung zu treiben.

2. Verfahren nach Anspruch 1, wobei der Farbwechsler (30) durch eine Zufuhrleitung (76), die einen in der Zufuhrleitung (76) bewegbaren Molch (86) aufweist, mit dem Lackkanister (34) verbunden ist, und wobei das Verfahren das Bewegen des Molchs von einer Stelle an dem Farbwechsler zu einer Stelle an dem Lackkanister einschließt, wodurch der elektrisch leitfähige Lack zum Lackkanister geführt wird und der Farbwechsler elektrisch vom Lackkanister isoliert wird.

3. Verfahren nach Anspruch 2, bei dem der Molch (86) mit einem nichtleitenden Fluid von einer Stelle an dem Farbwechsler (30) zu einer Stelle an dem Lackkanister (34) getrieben wird.

4. Verfahren nach Anspruch 2 oder 3, welches das Zuführen einer vorbestimmen Menge des elektrisch leitfähigen Lacks von dem Farbwechsler durch die Zufuhrleitung (76) zum Lackkanister (34) und dann das Treiben des Molchs (86) mit einem nichtleidenden Fluid von einer Stelle an dem Farbwechsler durch die Zufuhrleitung (76) zu einer Stelle an dem Lackkanister einschließt, um den elektrisch leitfähigen Lack in der Zufuhrleitung (76) zum Lackkanister zu treiben und den Farbwechlser elektrisch vom Lackkanister zu isolieren.

5. Verfahren nach einem der vorhergehenden Ansprüche, beinhaltend das Zuführen des elektrisch leitfähigen Lacks unter Druck durch die weitere Zufuhrleitung (74) in einem kontinuierlichen Strom zur elektrisch geladenen Lackapplikationsvorrichtung (27) in der Lackierkabine und elektrisches Aufladen des elektrisch leitfähigen Lacks in der weiteren Zufuhrleitung (74) nur, wenn der Farbwechsler (30) elektrisch von der weiteren Zufuhrleitung (74) und von dem elektrisch geladenen Lack isoliert ist.

6. Verfahren nach Anspruch 5, bei dem eine vorbestimmte Menge des elektrisch leitfähigen Lacks von dem Farbwechsler (30) durch die Zufuhrleitung (76) dem Lackkanister (34) zugeführt und dann der Molch (86) mit einem nichtleitfähigen Fluid von einer Stelle an dem Farbwechsler (30) durch die Zufuhrleitung zu einer Stelle an dem Lackkanister getrieben wird, um den elektrisch leitfähigen Lack, der in der zweiten Zufuhrleitung verblieben ist, zum Lackkanister zu führen und den Farbwechsler elektrisch vom Lackkanister zu isolieren.

7. Vorrichtung zum Applizieren eines elektrisch leitfähigen Lacks auf einen Träger, mit
einer Lackierkabine (20);
einer elektrisch geladenen Lackapplikationsvorrichtung (27) in der Lackierkabine (20);
einem außerhalb der Lackierkabine befindlichen Farbwechsler (30) auf Erdpotential;
zumindest einem Lackkanister (34);
einer ersten Zufuhrleitung (74) vom Lackkanister (34) zur elektrisch geladenen Lackapplikationsvorrichtung (27), die dazu geeignet ist, elektrisch leitfähigen Lack der elektrisch geladenen Lackapplikationsvorrichtung (27) zuzuführen; und
einer zweiten Zufuhrleitung (76) zwischen dem Lackkanister (34) und dem Farbwechsler (30), in der ein Molch (86) zwischen dem Farbwechsler und dem Lackkanister bewegbar ist, um Lack in der zweiten Zufuhrleitung zum Lackkanister zu führen und den Farbwechsler elektrisch vom Lackkanister und von dem elektrisch leitfähigen Lack zu isolieren, wenn Lack vom Lackkanister der elektrisch geladenen Lackapplikationsvorrichtung zugeführt wird und hierbei der elektrisch leitfähige Lack geladen wird,
wobei der Lackkanister einen mit der zweiten Zufuhrleitung (76) in Verbindung stehenden Einlass, einen mit der ersten Zufuhrleitung (74) in Verbindung stehenden Auslass und einen Kolben (56) enthält, der in dem Lackkanister bewegbar ist und dazu geeignet ist, sich bei der Aufnahme des elektrisch leitfähigen Lacks von dem Farbwechsler vom Einlass wegzubewegen und sich zum Auslass hin zu bewegen, um den elektrisch leitfähigen Lack unter Druck durch die erste Zufuhrleitung zur elektrisch geladenen Lackapplikationsvorrichtung (27) zu treiben, und
der Lackkanister (34) sich außerhalb der Lackierkabine (20) in einem elektrisch isolierten Gehäuse (28) befindet.

8. Vorrichtung zum Auftragen eines elektrisch leitfähigen Lacks nach Anspruch 7, wobei der Kolben (56) durch einen Servomotor (40) oder einen anderen Dosierantrieb angetrieben wird.

9. Vorrichtung nach Anspruch 7 oder 8, enthaltend einen zweiten Lackkanister (34), der mit dem Farbwechsler (30) durch eine dritte Zufuhrleitung verbunden ist, welche einen Molch aufweist, der zwischen dem Farbwechsler und dem zweiten Lackkanister bewegbar ist, um elektrisch leitfähigen Lack von dem Farbwechsler zu dem zweiten Lackkanister zu führen und den Farbwechsler im Anschluss an die Zuführung von elektrisch leitfähigem Lack zum zweiten Lackkanister elektrisch vom zweiten Lackkanister zu isolieren, sowie eine vierte Zufuhrleitung vom zweiten Lackkanister zur elektrisch geladenen Lackapplikationsvorrichtung (27).

## Revendications

1. Procédé d'application d'une peinture conductrice électriquement sur un substrat situé dans une cabine de peinture à l'aide d'un applicateur de peinture chargé électriquement (27) situé à l'intérieur de ladite cabine de peinture à partir d'un changeur de couleur (30) à un potentiel de masse, ledit procédé comprenant les étapes consistant à :
distribuer de la peinture conductrice électriquement par le biais d'un conduit de distribution (76) allant dudit changeur de couleur (70) au potentiel de masse à un bidon de peinture (64) situé à l'extérieur de ladite cabine de peinture ;
isoler ensuite électriquement ledit changeur de couleur (30) dudit bidon de peinture (64) et de ladite peinture conductrice électriquement ; et
distribuer ensuite ladite peinture conductrice électriquement par le biais d'un autre conduit de distribution (74) dudit bidon de peinture (64) situé à l'extérieur de ladite cabine de peinture audit applicateur de peinture chargé électriquement (27) situé à l'intérieur de ladite cabine de peinture, charger électriquement ladite peinture conductrice électriquement et appliquer ladite peinture conductrice électriquement sur ledit substrat, ledit changeur de couleur (30) étant isolé électriquement dudit bidon de peinture (64) et de ladite peinture conductrice électriquement ;
et déplacer un racleur (84) à travers ledit autre conduit de distribution (74) pour isoler électriquement l'applicateur de peinture (27) dudit bidon (64),
dans lequel ledit bidon de peinture comprend un piston (56), ledit procédé consistant à rentrer ledit piston dans ledit bidon de peinture (34) pour recevoir ladite peinture conductrice électriquement du changeur de couleur (30), sortir ensuite ledit piston pour entraîner ladite peinture conductrice électriquement à travers ledit conduit de distribution (74) vers ledit applicateur de peinture chargé électriquement.

2. Procédé selon la revendication 1, dans lequel ledit changeur de couleur (30) est relié audit bidon de peinture (34) par un conduit de distribution (76) ayant un racleur (86) mobile dans ledit conduit de distribution (76) ; ledit procédé consistant à déplacer ledit racleur dudit changeur de couleur adjacent audit bidon de peinture adjacent, distribuant ainsi ladite peinture conductrice électriquement audit bidon de peinture et isolant électriquement ledit changeur de couleur dudit bidon de peinture.

3. Procédé selon la revendication 2, dans lequel ledit procédé comprend l'entraînement dudit racleur (86) dudit changeur de couleur (30) adjacent audit bidon de peinture (34) adjacent avec un fluide non-conducteur.

4. Procédé selon la revendication 2 ou 3, dans lequel ledit procédé comprend la distribution d'un volume prédéterminé de ladite peinture conductrice électriquement dudit changeur de couleur (30) audit bidon de peinture (34) par le biais dudit conduit de distribution (76), entraînant ensuite ledit racleur (86) à travers ledit conduit de distribution (76) avec un fluide non-conducteur dudit changeur de couleur adjacent audit bidon de peinture pour distribuer ladite peinture conductrice électriquement dans ledit conduit de distribution (76) audit bidon de peinture et isoler électriquement ledit changeur de couleur dudit bidon de peinture.

5. Procédé selon l'une quelconque des revendications précédentes, comprenant la distribution de ladite peinture conductrice électriquement sous pression audit applicateur de peinture chargé électriquement (27) à l'intérieur de ladite cabine de peinture par le biais dudit autre conduit de distribution (74) selon un flux continu, le chargement électrique de ladite peinture conductrice électriquement dans ledit autre conduit de distribution (74) uniquement lorsque le changeur de couleur (30) est isolé électriquement dudit autre conduit de distribution (74) et de ladite peinture chargée électriquement.

6. Procédé selon la revendication 5, dans lequel ledit procédé comprend la distribution d'un volume prédéterminé de ladite peinture conductrice électriquement dudit changeur de couleur (30) audit bidon de peinture (34) par le biais dudit conduit de distribution (76), entraînant ainsi ledit racleur (86) à travers ledit conduit de distribution dudit changeur de couleur adjacent audit bidon de peinture adjacent avec ledit fluide non-conducteur pour distribuer ladite peinture conductrice électriquement restant dans ledit deuxième conduit de distribution audit bidon de peinture et isoler électriquement ledit changeur de couleur dudit bidon de peinture.

7. Appareil pour appliquer une peinture conductrice électriquement à un substrat comprenant :
une cabine de peinture (20) ;
un applicateur de peinture chargé électriquement (27) à l'intérieur de ladite cabine de peinture (20) ;
un changeur de couleur (30) situé à l'extérieur de ladite cabine de peinture à un potentiel de masse ;
au moins un bidon de peinture (34) ;
un premier conduit de distribution (74) allant dudit bidon de peinture (34) audit applicateur de peinture chargé électriquement (27) conçu pour distribuer de la peinture conductrice électriquement audit applicateur de peinture chargé électriquement ; et
un deuxième conduit de distribution (76) entre le bidon de peinture (34) et ledit changeur de couleur (30) ayant un racleur (86) mobile entre ledit changeur de couleur et ledit bidon de peinture pour distribuer de la peinture dans ledit deuxième conduit de distribution audit bidon de peinture et isoler électriquement ledit changeur de couleur dudit bidon de peinture et de ladite peinture conductrice électriquement lorsque la peinture est distribuée par ledit bidon de peinture audit applicateur de peinture chargé électriquement, chargeant ladite peinture conductrice électriquement,
ledit bidon de peinture comprenant une entrée communiquant avec ledit deuxième conduit de distribution (76), une sortie communiquant avec ledit premier conduit (74) et un piston (56) mobile à l'intérieur dudit bidon de peinture (34) conçu pour s'écarter de ladite entrée lors de la réception de ladite peinture conductrice électriquement dudit changeur de couleur (30) et s'approcher de ladite sortie pour entraîner la peinture conductrice électriquement sous pression à travers ledit premier conduit de distribution (74) vers ledit applicateur de peinture chargé électriquement (27) ; et
ledit bidon de peinture (34) étant situé à l'extérieur de ladite cabine de peinture (20) dans une cabine isolée électriquement (28).

8. Appareil pour appliquer une peinture conductrice électriquement selon la revendication 7, dans lequel ledit piston (56) est entraîné par un servomoteur (40) ou autres moyens de commande de dosage.

9. Appareil selon la revendication 7 ou 8, dans lequel ledit appareil comprend un second bidon de peinture (34) relié audit changeur de couleur (30) par un troisième conduit de distribution ayant un racleur mobile entre ledit changeur de couleur et ledit second bidon de peinture pour distribuer de la peinture conductrice électriquement dudit changeur de couleur audit second bidon de peinture et isoler électriquement ledit changeur de couleur dudit bidon de peinture suite à la distribution de peinture conductrice électriquement audit bidon de peinture et un quatrième conduit de distribution allant dudit second bidon de peinture audit applicateur de peinture chargé électriquement (27).
